# FASCICULE DE BREVET EUROPEEN

(11) **EP 3 440 365 B1**
(45) Date de publication et mention de la délivrance du brevet: **15.11.2023**
(21) Numéro de dépôt: 17720197.7
(22) Date de dépôt: 06.04.2017
(51) Int. Cl.: F16B 19/08, B29C 65/56, F16B 37/06, F16B 5/04

(54) **COMPOSANT DE FIXATION ET PROCÉDÉ DE FABRICATION D'UNE PIÈCE COMPOSITE AVEC CE COMPOSANT**
BEFESTIGUNGSKOMPONENTE UND VERFAHREN ZUR HERSTELLUNG EINES VERBUNDTEILS MIT DIESER KOMPONENTE
ATTACHMENT COMPONENT AND METHOD FOR MANUFACTURING A COMPOSITE PART WITH SAID COMPONENT

(30) Priorité: 07.04.2016 FR 1653070
(43) Date de publication de la demande: 13.02.2019
(73) Titulaire: Grojean, Maxime, 55200 Commercy (FR)
(72) Inventeur: Grojean, Maxime, 55200 Commercy (FR)
(74) Mandataire: Germain Maureau
(86) Numéro de dépôt international: PCT/FR2017/050827
(87) Numéro de publication internationale: WO 2017/174943

(56) Documents cités:
- EP-A1- 0 392 568
- DE-A1-102012 204 187
- FR-A1- 2 900 451
- US-A- 5 199 149

## Description

La présente invention concerne un composant de fixation et un procédé de fabrication d'une pièce en matériau composite au moyen de ce composant de fixation.

Le contexte actuel de réduction de consommation énergétique favorise le développement de pièces en matériau composite, pour leurs propriétés de légèreté et de tenue mécanique. Les aéronefs ou véhicules tendent à intégrer de plus en plus de pièces en matériau composite, notamment des pièces de structure. Or, les pièces de structure nécessitent de pouvoir y rapporter et fixer des composants ou accessoires, ainsi que pouvoir démonter aisément ces composants ou accessoires pour les changer.

Cependant, il est actuellement difficile de fixer des pièces en matériau composite les unes aux autres ou d'y rapporter des accessoires dans d'autres matériaux.

Une première raison de cette difficulté est la complexité de cette opération et son coût d'intégration. Il existe en effet un nombre d'étapes important pour intégrer un composant de fixation dans une matrice composite : réalisation d'un trou, collage, préparations diverses avant intégration, etc. Toutes ces étapes sont chronophages et impactent à la hausse les coûts de fabrication de pièces composites comportant des éléments de fixations.

Une deuxième raison est l'optimisation des performances mécaniques de la pièce composite. En effet, la réalisation des trous engendre une coupe des fibres de la matrice composite, ce qui affaiblit la pièce composite au niveau des points de fixations. Or, les points de fixation sont généralement soumis à des sollicitations importantes. Il est connu du documnet FR2900451 une cheville d'ancrage auto-taraudeuse à ponts de liaison déformables. Il est par ailleurs connu du document US5199149 un procédé d'assemblage de deux objets plats et minces au moyen d'une broche de jonction.

Aussi, la présente invention vise à pallier tout ou partie de ces inconvénients en proposant un composant de fixation permettant de fixer ou démonter aisément des pièces en matériau composite, avec un impact nul ou minime sur les performances mécaniques intrinsèques à ce type de pièces, ainsi qu'un procédé de fabrication d'une pièce en matériau composite offrant la possibilité d'être aisément fixée ou désolidarisée d'autres composants.

A cet effet, l'invention a pour objet un composant de fixation comprenant un corps, le corps comprenant des moyens de fixation destinés à permettre l'assemblage du composant de fixation à une pièce intégrant des moyens de fixation complémentaires, une pointe d'insertion agencée à une extrémité du corps , la pointe d'insertion comprenant un sommet en forme de pointe pour permettre d'insérer au moins une partie du corps à travers des fibres d'une pièce en matériau composite en les déviant sans les sectionner, une butée axiale destinée à arrêter l'insertion du corps à travers la pièce en matériau composite, et une portion sécable interposée entre la pointe d'insertion et ladite extrémité du corps, la portion sécable étant configurée pour rompre sous l'effet d'un effort de compression prédéterminé exercé sur la pointe d'insertion en vue de détacher la pointe d'insertion du corps.

Ainsi, le composant de fixation selon l'invention offre une solution simple, robuste, rapide et efficace pour permettre de fixer ou démonter des accessoires sur une pièce en matériau composite. La pointe d'insertion permet d'écarter progressivement les fibres du matériau composite, sans les sectionner, afin de préserver la résistance mécanique de la pièce en matériau composite. Du fait de la portion sécable, la pointe d'insertion pouvant ensuite être détachée du reste du composant de fixation pour libérer l'accès aux moyens de fixation et permettre ainsi la fixation d'un composant complémentaire.

Selon un mode de réalisation préféré, la pointe d'insertion comprend une partie de base et une partie d'extrémité, la partie d'extrémité ayant un angle au sommet inférieur à un angle au sommet de la partie de base.

Ces caractéristiques permettent d'insérer efficacement le composant de fixation à travers les fibres d'une pièce composite sans altérer la résistance mécanique offerte par la pièce composite. Les fibres sont déviées, au lieu d'être coupées, et resserrées autour de la pointe d'insertion puis du corps du composant de fixation, ce renforce localement la tenue mécanique autour du composant de fixation.

Selon un mode de réalisation préféré, la pointe d'insertion a la forme d'un cône de révolution.

Cela permet de ne pas abîmer les fibres de la pièce composite et de répartir uniformément l'effort sur la portion sécable lors de l'introduction de la pointe d'insertion, afin de ne pas provoquer une rupture anticipée de cette portion sécable. La fiabilité est donc améliorée.

Selon un mode de réalisation préféré, le corps comprend une partie de tassement agencée entre la portion sécable et les moyens de fixation.

Cette partie de tassement est destinée à se tasser après rupture de la portion sécable, en protection des moyens de fixation, afin que les moyens de fixation ne soit pas eux-mêmes déformés. Cela permet donc de protéger, par déformation préférentielle, la zone active de fixation.

Selon une possibilité, la pointe d'insertion présente une base de largeur égale ou supérieure à celle du corps.

Cela permet de réarranger les fibres de la pièce en matière composite autour du corps, en vue de consolider localement la tenue mécanique de la pièce composite. Cela évite aussi, lorsque le composant de fixation est de type mâle incluant un filetage extérieur, que des fibres de la pièce composite se coincent dans le filetage extérieur.

Avantageusement, la portion sécable est un pont de matière entre le corps et à la pointe d'insertion. Il s'agit donc d'une portion de moindre épaisseur par rapport au corps et à la pointe d'insertion.

Selon un mode de réalisation préféré, le corps délimite un conduit et la pointe d'insertion présente une surface d'appui s'étendant autour du conduit, la surface d'appui étant destinée à venir en appui, après rupture de la portion sécable, contre une face de réception de l'extrémité du corps s'étendant autour du conduit.

Cela permet avantageusement de fermer l'accès au conduit central pour éviter l'introduction de matière plastique à l'intérieur du conduit central lors d'une étape ultérieure d'injection. Cette géométrie a donc pour fonction d'assurer une étanchéité et protéger la zone active de fixation.

Selon un mode de réalisation préféré, la butée axiale comprend une platine rapportée.

La platine permet d'étendre la zone d'appui du composant de fixation sur la pièce en matériau composite, afin de répartir les efforts et améliorer la tenue mécanique du composant de fixation assemblé à la pièce en matériau composite.

En outre, le fait que la platine soit rapportée offre la possibilité d'adapter, via le choix de l'étendue et/ou de la forme de la platine, l'intensité et la distribution de l'appui sur la pièce en matériau composite.

Selon un mode de réalisation préféré, la portion sécable présente une épaisseur décroissante en direction du corps.

Ainsi, la rupture a lieu au plus près du corps.

Selon un mode de réalisation préféré, le composant de fixation est en aluminium.

Ainsi, le composant de fixation offre une solution avantageuse en termes de masse / performances mécaniques. De plus, l'aluminium permet d'éviter les problèmes de corrosion au niveau de la zone sécable après rupture.

De préférence, le composant de fixation, hors platine le cas échéant, est une seule et même pièce.

Selon un autre aspect, l'invention a aussi pour objet un procédé de fabrication d'une pièce en matériau composite, comprenant les étapes :
- insérer la pointe d'insertion d'un composant de fixation ayant les caractéristiques précitées à travers une feuille en matériau composite,
- générer une force sur la pointe d'insertion de manière à provoquer la rupture de la portion sécable.

Ce procédé permet d'obtenir rapidement et à moindres coûts une pièce en matériau composite ayant un composant de fixation. Cela permet l'assemblage ou le démontage aisé de cette pièce en matériau composite à d'autres pièces d'un véhicule pour exemple ou de toutes autres structures pouvant intégrer des pièces en matériaux composites.

L'étape d'insertion de la pointe d'insertion à travers la feuille en matériau composite peut être réalisée par fermeture d'un moule où sont positionnés la feuille en matériau composite et le composant de fixation.

L'étape de génération d'une force sur la pointe d'insertion pour provoquer la rupture de la portion sécable peut être réalisée par fermeture de ce moule. Ainsi, les étapes d'insertion du composant de fixation et/ou de séparation de la pointe d'insertion par rupture de la portion sécable peuvent être réalisées par fermeture du moule.

Selon un mode de réalisation préféré, le procédé comprend la génération d'ultrasons sur le composant de fixation au cours de l'insertion de la pointe d'insertion à travers la feuille en matériau composite.

La génération d'ultrasons facilite l'insertion de la pointe d'insertion à travers la feuille composite, ainsi que l'écartement des fibres de la feuille composite au cours de cette insertion.

L'insertion de la pointe d'insertion et la génération d'ultrasons sont concomitantes. Ces étapes peuvent être réalisées par l'intermédiaire d'un bras robotisé d'amenage destiné à amener le composant de fixation en regard de la feuille composite, ce bras pouvant être équipé d'un actionneur à ultrasons. Toutefois, selon un mode de réalisation préféré, l'actionneur à ultrasons équipe le moule. Sa présence facilite l'insertion de la pointe d'insertion dans la feuille composite lors de la fermeture du moule.

Le procédé peut comprendre une étape ultérieure d'injection de matière plastique.

Le procédé peut comprendre une étape de traitement de surface pour empêcher la corrosion du composant de fixation, notamment au niveau de la zone de rupture.

D'autres caractéristiques et avantages de la présente invention ressortiront clairement de la description détaillée ci-après d'un mode de réalisation, donné à titre d'exemple non limitatif, en référence aux dessins annexés dans lesquels :
- La figure 1 est une vue en perspective et en coupe partielle d'un composant de fixation selon un mode de réalisation de l'invention,
- Les figures 2 et 3 sont des vues en coupe longitudinale d'un composant de fixation selon un mode de réalisation de l'invention, respectivement avant et après rupture de la portion sécable,
- La figure 4 est une vue de côté d'un composant de fixation selon un mode de réalisation de l'invention,
- Les figures 5a à 5e sont des vues de côté illustrant des étapes d'un procédé de fabrication d'une pièce en matériau composite et d'un composant de fixation selon un mode de réalisation de l'invention,
- Les figures 6 et 7 sont des vues en perspective, respectivement de dessus et de dessous, d'une pièce en matériau composite obtenue à l'issue d'un procédé de fabrication selon un mode de réalisation de l'invention.

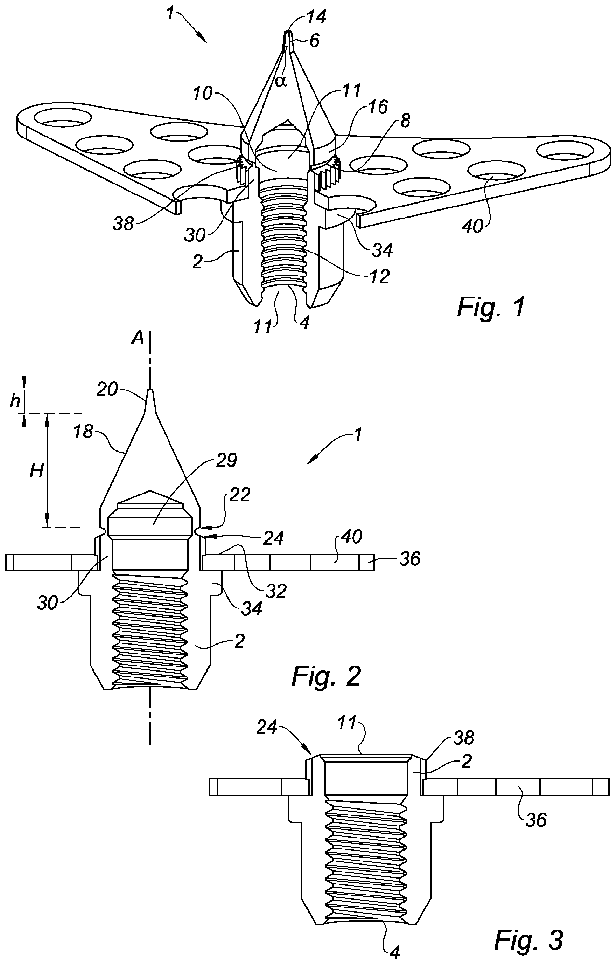

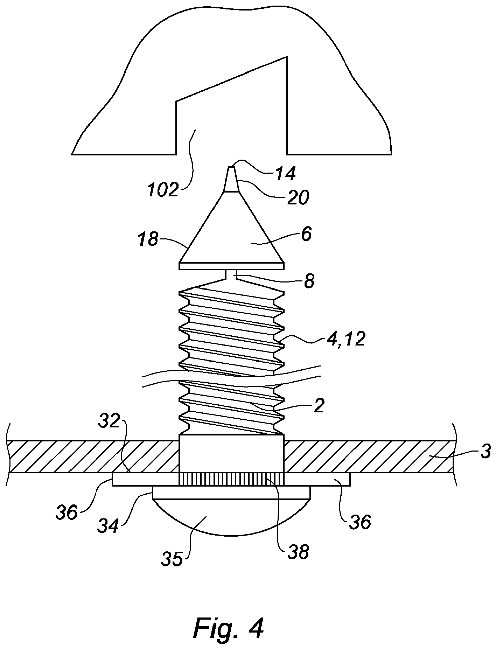

Les figures 1 et 4 montrent un composant 1 de fixation selon un mode de réalisation de l'invention, respectivement de type femelle et de type mâle.

Le composant 1 de fixation comprend un corps 2, qui peut être de forme cylindrique, des moyens de fixation, par exemple un filetage 4, ménagés sur le corps 2 et destinés à la fixation d'un composant complémentaire comme une vis ou un écrou, une pointe 6 d'insertion agencée à une extrémité du corps 2, une butée 32 axiale, et une portion 8 sécable interposée entre la pointe 6 d'insertion et l'extrémité du corps 2, la portion 8 sécable étant destinée à rompre sous l'effet d'un effort, notamment axial, prédéterminé exercé sur la pointe 6 d'insertion afin de détacher la pointe 6 d'insertion du corps 2 et ainsi libérer l'accès aux moyens de fixation.

Les moyens de fixation s'étendent uniquement sous la portion 8 sécable, donc sous la pointe 6 d'insertion, entre l'extrémité du corps 2 à laquelle est liée la pointe 6 d'insertion par la portion 8 sécable et une extrémité opposée du corps 2.

Pour un composant 1 de fixation de type femelle, comme visible sur la figure 1, le corps 2 peut délimiter un conduit 10, notamment cylindrique, ayant une paroi 12 latérale sur laquelle sont ménagés les moyens de fixation comme le filetage 4. Le conduit 10 central délimite une ou deux ouvertures 11 à une ou aux deux extrémités du corps 2. Le conduit 10 central peut être ainsi destiné à former un trou borgne ou traversant. Ainsi, le corps 2 est destiné à recevoir un composant de fixation complémentaire comme une vis.

Selon l'exemple de la figure 4, le corps 2 présente une paroi 12 latérale, externe, où sont ménagés les moyens de fixation comme le filetage 4. Le composant 1 de fixation selon la figure 4 est donc de type goujon destiné à être inséré dans un composant de fixation complémentaire pour assembler par exemple deux pièces.

Au lieu du filetage 4, les moyens de fixation pourraient inclure un axe lisse d'indexation ou un ergot ou une rainure permettant un assemblage par exemple de type quart de tour.

La pointe 6 d'insertion est conformée pour permettre d'insérer au moins une partie du corps 2 à travers une feuille 3 en matériau composite à base de fibres tissées ou en vrac. La pointe 6 d'insertion comprend un sommet 14 en forme de pointe et, à l'opposé du sommet 14, une base 16 qui masque l'extrémité du corps 2 à laquelle la pointe 6 d'insertion est rattachée lorsqu'on regarde le composant 1 de fixation selon une direction axiale A du côté de la pointe 6 d'insertion. Autrement dit, la base 16 s'étend au droit de l'extrémité correspondante du corps 2 et la recouvre. La largeur ou diamètre, plus généralement la section de la base 16, est égal ou supérieur, de préférence supérieur, à la largeur, diamètre ou section de l'extrémité correspondante du corps 2, et notamment la partie du corps 2 s'étendant depuis cette extrémité jusqu'à la butée 32 axiale.

La pointe 6 d'insertion permet avantageusement d'insérer le corps 2 à travers une feuille en matériau composite sans altérer les performances mécaniques de celle-ci. La pointe 6 d'insertion est donc configurée pour écarter et dévier les fibres du matériau composite plutôt que les sectionner.

Ainsi, la pointe 6 d'insertion comprend une partie 18 de base s'étendant à partir de la portion 8 sécable, notamment à partir de la base 16, et une partie 20 d'extrémité s'étendant notamment jusqu'au sommet 14. La partie 18 de base a un angle au sommet qui est supérieur à l'angle α au sommet de la partie 20 d'extrémité.

Ainsi, la partie 20 d'extrémité, plus effilée, perce le matériau composite en sectionnant le moins de fibres possible, puis la partie 18 de base, écarte les fibres, les dévie et fraie un passage pour le corps 2 en réarrangeant les fibres tout autour de celui-ci.

La partie 18 de base peut être de forme tronconique. La partie 20 d'extrémité peut être conique. Alternativement, la partie 18 de base et la partie 20 de base peuvent présenter une paroi latérale concave de sorte que la pointe 6 d'insertion est de plus en plus effilée en direction du sommet 14. Dans les deux cas, comme indiqué précédemment, la pointe 6 d'insertion présente un angle au sommet progressivement décroissant en direction du sommet 14.

La pointe 6 d'insertion devenant une pièce perdue après son détachement du corps 2, la hauteur de la pointe 6 d'insertion est réduite au minimum pour limiter le coût matière, sans pour autant diminuer les performances de pénétration et déviation sans rupture des fibres d'une matrice composite. Ainsi, la hauteur h de la partie 20 d'extrémité peut être inférieure à la hauteur H de la partie 18 de base.

De préférence, comme visible sur les figures, la pointe 6 d'insertion, notamment les parties 18, 20 de base et d'extrémité, a la forme d'un cône de révolution, ce qui permet une répartition uniforme de l'appui sur la portion 8 sécable lors de l'introduction de la pointe 6 d'insertion, ainsi que des fibres autour du corps 2.

Selon l'exemple de la figure 1, pour un composant 1 de fixation de type femelle, la pointe 6 d'insertion peut avantageusement comprendre une surface 22 d'appui qui s'étend tout autour du conduit 10, en regard d'une surface 24 de réception du corps 2, et qui est destinée à venir en appui contre la surface 24 de réception après rupture de la portion 8 sécable. La surface 24 de réception s'étend tout autour de l'ouverture 11 située du côté de la pointe d'insertion, si bien que l'appui de la surface 22 d'appui sur la surface 24 de réception permet de fermer l'accès à l'ouverture 11, au conduit 10 central, et donc d'éviter l'introduction de matière plastique à l'intérieur du conduit 10 central lors d'une étape d'injection ultérieure.

La portion 8 sécable relie le corps 2 à la pointe 6 d'insertion, est solidaire à la fois du corps 2 et de la pointe 6 d'insertion. La portion 8 sécable forme ici un pont de matière entre le corps 2 et la pointe 6 d'insertion.

La portion 8 sécable est destinée à rompre sous l'effet d'un effort prédéterminé exercé sur la pointe d'insertion, notamment selon l'axe A du corps 2, de préférence supérieur à un effort d'insertion de la pointe 6 d'insertion à travers une feuille 3 en matériau composite. A cette fin, la portion 8 sécable peut être une portion de moindre épaisseur par rapport à l'épaisseur du corps 2 et de la pointe 6 d'insertion.

On notera que pour permettre la rupture de la portion 8 sécable, sans flambage du corps 2, la largeur, épaisseur ou le cas échéant le diamètre de la portion 8 sécable est sensiblement inférieur à la largeur, épaisseur ou diamètre du corps 2 et de la pointe 6 d'insertion adjacents, par exemple inférieur à un demi, un tiers, de préférence un quart, et plus avantageusement inférieur à un cinquième de la largeur, épaisseur ou diamètre du corps 2 et de la pointe 6 d'insertion adjacents.

Selon l'exemple de la figure 1, la portion 8 sécable est une paroi, notamment en forme de bague cylindrique, amincie par rapport aux parties du corps 2 et de la pointe 6 d'insertion dont cette portion 8 sécable est solidaire.

Selon l'exemple de la figure 4, la portion 8 sécable est un téton dont une extrémité est solidaire de la pointe 6 d'insertion et une extrémité opposée est solidaire d'une extrémité du corps 2. Le diamètre de ce téton est sensiblement inférieur à celui du corps 2 et de la pointe 6 d'insertion.

De préférence, comme visible sur la figure 2 où le composant 1 de fixation est de type femelle, la pointe 6 d'insertion peut présenter un conduit 29 de largeur ou diamètre supérieur à celui du conduit 10.

Par ailleurs, la portion 8 sécable peut présenter une épaisseur décroissante en direction du corps 2. Cela permet que la rupture ait lieu au plus près du corps 2, et donc que la plus grande partie de la portion 8 sécable reste solidaire de la pointe 6 d'insertion qui sera détachée du corps 2. Ainsi, il n'y a pas nécessairement besoin d'une étape d'usinage de finition après rupture de la portion 8 sécable. Par exemple, le téton de la figure 4 peut avoir une forme tronconique, côté sommet vers le corps 2, c'est-à-dire en ayant un diamètre plus faible du côté du corps 2 que du côté de la pointe 6 d'insertion. Ainsi, le téton se détachera prioritairement du corps 2 pour rester en cohésion avec la pointe 6 d'insertion.

Pour compenser la compression du corps 2 résultant de l'appui de la pointe 6 d'insertion contre le corps 2 après rupture de la portion 8 sécable, le corps 2 peut comprendre une partie 30 de tassement destinée à se tasser sous l'effet de cette compression.

La partie 30 de tassement est agencée entre la portion 8 sécable et les moyens de fixation comme le filetage 4, de manière à protéger les moyens de fixation. En d'autres termes, la partie 30 de tassement est destinée à se déformer au lieu des moyens de fixation.

Selon l'exemple des figures 1 et 2, la partie 30 de tassement délimite une section de conduit 10 central plus large que la partie du corps 2 supportant les moyens de fixation. Ainsi, la partie 30 de tassement peut se tasser de manière à absorber l'appui de la pointe 6 d'insertion, sans entraver l'accès à la partie fonctionnelle du conduit 10 central où s'étendent les moyens de fixation. En particulier, la partie 30 de tassement peut présenter une épaisseur inférieure à celle du reste du corps 2. La surface 24 de réception est avantageusement ménagée sur la partie 30 de tassement.

Selon l'exemple de la figure 4, le téton lui-même se tasse pour absorber l'appui de la pointe 6 d'insertion. Toutefois, l'extrémité du corps 2 peut comprendre une partie 30 de tassement qui a une forme sensiblement conique en direction de la portion 8 sécable, c'est-à-dire du téton. Cette partie 30 de tassement est écrasée par la pointe 6 d'insertion après rupture, pour éviter une déformation, par exemple tassement ou flambage, du reste du corps 2 et notamment des moyens de fixation. On notera que la partie 20 d'extrémité est également destinée à se tasser pour préserver un tassement ou flambage de la partie du corps 2 où sont situés les moyens de fixation.

De préférence pour un composant 1 de fixation de type mâle, l'extrémité du corps 2 à laquelle est reliée la pointe 6 d'insertion par l'intermédiaire de la portion 8 sécable peut présenter une largeur ou diamètre extérieur décroissant en direction de la portion 8 sécable de manière à faire office de guide pour la mise en place par exemple d'un écrou complémentaire après détachement de la pointe 6 d'insertion. Cette extrémité du corps 2 peut être par exemple conique.

La butée 32 axiale s'étend radialement à partir du corps 2. La butée 32 axiale est destinée à venir en appui, directement ou indirectement, contre la feuille 3 en matériau composite pour stopper l'insertion du corps 2 à travers cette feuille 3 en matériau composite.

La butée 32 axiale peut faire partie intégrante du corps 2, le corps 2 et la butée 32 étant une seule et même pièce, si bien que le composant 1 de fixation est monobloc, ou bien être rapportée au corps 2 et rendue solidaire de celui-ci par exemple par collage, sertissage, soudure, etc.

Dans le premier cas, la butée 32 axiale est par exemple formée par une collerette ou épaulement 34 s'étendant à partir d'une paroi latérale du corps 2 (figures 1 et 2), ou depuis une tête 35 du composant de fixation (figure 4).

Dans le deuxième cas, la butée 32 axiale peut être formée par une platine 36 rapportée contre le corps 2. Le cas échéant, la platine 36 peut être positionnée en appui contre l'épaulement 34. La platine 36 s'étend autour du corps 2, par exemple radialement, et permet de répartir l'appui du composant 1 de fixation sur la feuille 3 en matériau composite. La platine 36 peut assemblée par sertissage au corps 2, emmanchée en force, ou soudée au corps 2.

On notera que le composant 1 de fixation peut comporter des moyens de blocage en rotation configurés pour empêcher une rotation du composant 1 de rotation autour de l'axe A du corps 2 une fois le composant 1 de rotation mis en place à travers la feuille 3 en matériau composite. Les moyens de blocage en rotation peuvent être ménagés sur une paroi latérale extérieure du corps 2, l'épaulement 34 ou la platine 36. Par exemple, les moyens de blocage en rotation comprennent des cannelures 38 ménagées sur l'épaulement 34 ou une paroi latérale extérieure du corps 2, au niveau le cas échéant de la platine 36, et/ou des logements ou trous 40 ménagés à travers la platine 36 et dans lequel de la matière plastique est destinée à s'écouler lors d'une étape d'injection. Les moyens de blocage en rotation s'étendent exclusivement sous la portion 8 sécable, entre l'extrémité du corps 2 reliée à la pointe 6 d'insertion et une extrémité opposée du corps 2, afin de ne pas être emportés lors du détachement de la pointe 6 d'insertion.

Le composant 1 de fixation peut être en acier, acier inoxydable, titane, matériau plastique chargé ou non, etc. De préférence, le composant 1 de fixation est en aluminium. La platine 36 peut être préférentiellement en aluminium ou acier.

Le composant 1 de fixation peut subir un traitement de surface pour éviter le développement d'une corrosion.

Comme visible sur les figures, le composant 1 de fixation, notamment le corps 2, la pointe 6 d'insertion et la portion 8 sécable, est une seule et même pièce, avant détachement de la pointe 6 d'insertion, hormis la platine 36 qui est rapportée et offre une adaptabilité améliorée.

L'invention a aussi pour objet un procédé de fabrication d'une pièce 100 en matériau composite, comprenant les étapes :
- insérer la pointe 6 d'insertion du composant 1 de fixation ayant tout ou partie des caractéristiques décrites précédemment à travers la feuille 3 composite,
- générer une force sur la pointe 6 d'insertion de manière à provoquer la rupture de la portion 8 sécable.

La feuille 3 en matériau composite peut être obtenue en découpant dans un matériau composite une feuille au contour et aux dimensions prédéterminées. Le matériau composite peut comprendre des fibres tissées ou un mat.

Il est possible de prévoir une étape de mise en température, c'est-à-dire de chauffe, d'une presse d'injection et d'un moule destiné à la mise en forme de la feuille 3 composite, ainsi que de la feuille 3 composite, par exemple placée dans un four.

La feuille 3 composite peut ensuite être positionnée à l'intérieur du moule, par exemple au moyen d'un bras robotisé, et de préférence plaquée contre l'une des deux parties du moule, par exemple par l'intermédiaire de doigts de plaquage, de manière à adopter la forme de l'empreinte du moule. Cette étape de pointage de la feuille composite permet de pré-positionner celle-ci dans l'empreinte du moule, de l'immobiliser selon sa future forme finale, ce qui est particulièrement avantageux pour des formes en relief, afin d'éviter une détérioration, déchirement, etc. de la feuille composite ou une déformation des composants de fixation au moment de l'insertion des composants de fixation à travers la feuille en matériau composite.

Le procédé comprend ensuite la mise en place du ou des composants de fixation dans la partie du moule opposée à celle recevant la feuille composite, par exemple dans des logements (non représentés) prévus à cet effet.

Le procédé comprend ensuite une étape de fermeture du moule, qui engendre la mise en forme de la feuille 3 composite.

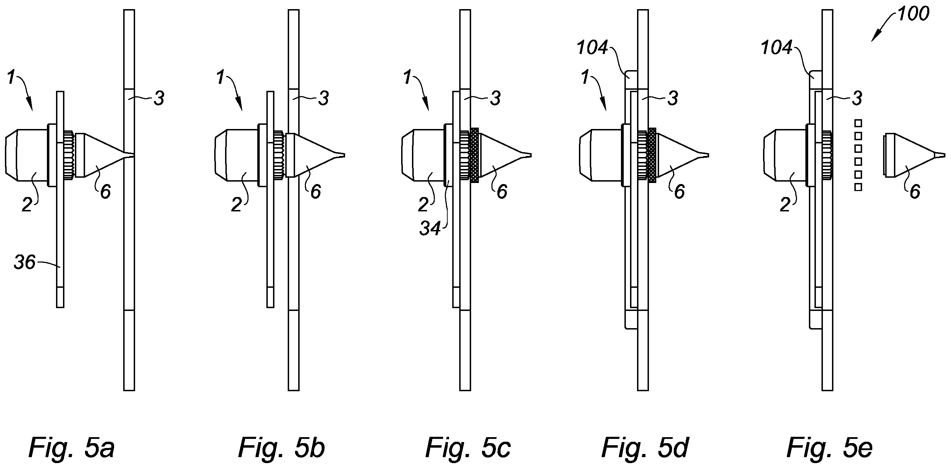

La fermeture du moule provoque en outre dans un premier temps une perforation de la feuille 3 composite au moyen du sommet 14 de la pointe 6 d'insertion (figure 5a), et plus particulièrement la partie 20 d'extrémité, puis dans un deuxième temps un écartement des fibres de la feuille 3 composite. En pénétrant dans la feuille composite, la pointe 6 d'insertion progresse entre les fibres en les déviant, sans les sectionner (figure 5b).

Le procédé peut avantageusement comprendre une étape de génération d'ultrasons sur le composant 1 de fixation au cours de l'insertion de la pointe d'insertion, en vue de faciliter l'insertion de la pointe 6 d'insertion par échauffement de la feuille 3 composite.

L'étape d'insertion de la pointe 6 d'insertion à travers la feuille 3 composite s'arrête lorsque la butée 32 axiale, par exemple l'épaulement 34, ou le cas échéant la platine 36, vient en appui contre la feuille 3 composite (figure 5c). A ce stade, le sommet de la pointe 6 d'insertion peut être entré en contact avec le fond d'un logement 102 du moule (figure 4) destiné à la recevoir. La poursuite de la fermeture du moule génère comme mentionné précédemment un effort, notamment axial, et donc la compression de la pointe 6 d'insertion, par exemple sur quelques dixièmes de millimètres, ce qui provoque la rupture de la portion 8 sécable.

Pour favoriser la rupture de la portion 8 sécable, le fond du logement 102 peut être conformé pour provoquer un basculement de la pointe 6 d'insertion. Ainsi, ce fond peut être par exemple en forme de plan incliné, ou bombé.

La rupture de la portion 8 sécable peut être provoquée par un effort radial, par exemple de compression radiale, ou un effort au moins en partie radial, combiné par exemple à un effort axial.

A ce stade, la pointe 6 d'insertion est détachée du corps 2. Toutefois, la pointe 6 d'insertion reste avantageusement maintenue en appui contre le corps 2, par exemple via la surface 22 d'appui plaquée contre la surface 24 de réception, pour empêcher de la matière plastique de s'introduire dans le conduit 10 lors d'une étape ultérieure d'injection.

Le procédé peut en effet comprendre une étape supplémentaire d'injection d'une matière plastique (figure 5d), notamment au niveau du ou des composants 1 de fixation, par recouvrement de l'épaulement 34 et/ou la platine 36. Le revêtement 104 en matière plastique permet d'assurer la cohésion de ce ou ces composants 1 de fixation avec la feuille 3 composite (tenue au déboutonnage et résistance au couple qui sera ensuite appliqué au composant de fixation coopérant avec un composant de fixation complémentaire).

Lors de l'ouverture du moule, la pointe 6 d'insertion est détachée du composant 1 de fixation (figure 5e) et libère ainsi l'accès au corps 2, en particulier aux moyens de fixation comme le filetage 4, permettant ainsi de connecter la pièce 100 composite à une ou plusieurs autres pièces.

Selon un mode de réalisation, le procédé peut comprendre une étape d'expulsion de la pointe 6 d'insertion avant l'ouverture du moule, par exemple par aspiration, par gravité, ou mécaniquement, par exemple par poussée. Cette poussée peut être exercée sur la pointe 6 d'insertion déjà détachée par l'intermédiaire d'une pointe 6 d'insertion d'un composant 1 de fixation successif.

Il est possible si nécessaire de prévoir une étape de traitement de surface pour la partie sectionnée du composant 1 de fixation afin d'éviter l'apparition de corrosion sur cette partie.

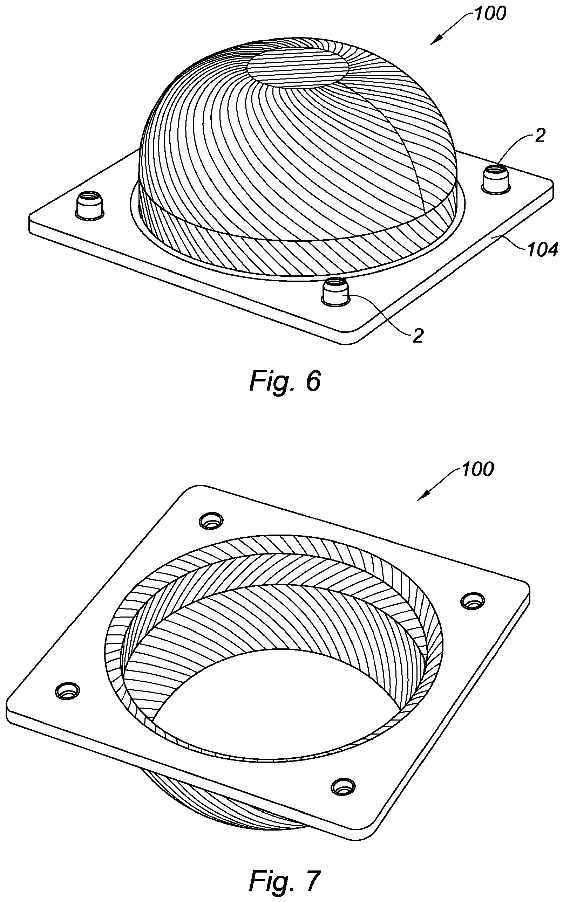

Les figures 6 et 7 illustrent un exemple de pièce 100 composite obtenue à l'issue de ce procédé.

Alternativement, au lieu de prévoir une insertion des composants 1 de fixation par fermeture du moule, cette insertion peut avoir lieu par génération d'une pression exercée par un robot d'amenage. De plus, ce robot d'amenage peut être équipé d'un générateur à ultrasons afin de générer des ultrasons sur le composant 1 de fixation en direction de la feuille composite et faciliter ainsi l'insertion du ou des composants 1 de fixation dans la feuille 3 composite.

Alternativement, la mise en place de la feuille 3 composite à l'intérieur du moule pourrait être réalisée par pulvérisation de fibres courtes dans l'empreinte du moule, et la pointe 6 d'insertion du ou des composants 1 de fixation pourraient, après pénétration au travers du tapis de fibres courtes, pénétrer dans des cavités escamotables du moule (non représentées) qui s'effaceront progressivement sous une résistance inférieure à celle nécessaire pour la casse de la portion 8 sécable jusqu'à arriver en butée et cette fois faire céder la portion 8 sécable afin de désolidariser la pointe 6 d'insertion.

Au lieu de prévoir une rupture de la portion 8 sécable par fermeture du moule, il est possible de prévoir une rupture de la portion 8 sécable au moment de l'insertion de la pointe 6 d'insertion dans la feuille 3 composite, ou en générant un effort manuel sur la pointe 6 d'insertion, directement ou par l'intermédiaire d'un outil à main comme une pince.

Il peut par ailleurs être prévu que l'étape d'injection ait lieu le cas échéant avant rupture de la portion 8 sécable, c'est-à-dire avant de générer sur la portion 6 d'insertion un effort de nature à rompre la portion 8 sécable.

Bien entendu, l'invention n'est nullement limitée au mode de réalisation décrit ci-dessus, ce mode de réalisation n'ayant été donné qu'à titre d'exemple. Des modifications sont possibles, notamment du point de vue de la constitution des divers dispositifs ou par la substitution d'équivalents techniques, sans sortir pour autant du domaine de protection de l'invention tel que défini par les revendications.

## Revendications

1. Composant (1) de fixation comprenant un corps (2), le corps (2) comprenant des moyens de fixation destinés à permettre l'assemblage du composant (1) de fixation à une pièce intégrant des moyens de fixation complémentaires, une pointe (6) d'insertion agencée à une extrémité du corps (2), la pointe (6) d'insertion comprenant un sommet (14) en forme de pointe pour permettre d'insérer au moins une partie du corps (2) à travers des fibres d'une pièce en matériau composite en les déviant sans les sectionner, une butée (32) axiale destinée à arrêter l'insertion du corps à travers la pièce en matériau composite, et une portion (8) sécable interposée entre la pointe (6) d'insertion et ladite extrémité du corps (2), la portion (8) sécable étant configurée pour rompre sous l'effet d'un effort de compression prédéterminé exercé sur la pointe (6) d'insertion en vue de détacher la pointe (6) d'insertion du corps (2).

2. Composant (1) de fixation selon la revendication 1, dans lequel la pointe (6) d'insertion comprend une partie (18) de base et une partie (20) d'extrémité, la partie (20) d'extrémité ayant un angle au sommet inférieur à un angle au sommet de la partie (18) de base.

3. Composant (1) de fixation selon la revendication 1 ou 2, dans lequel la pointe (6) d'insertion a la forme d'un cône de révolution.

4. Composant (1) de fixation selon l'une des revendications 1 à 3, dans lequel le corps (2) comprend une partie (30) de tassement agencée entre la portion (8) sécable et les moyens de fixation.

5. Composant (1) de fixation selon l'une des revendications 1 à 4, dans lequel le corps (2) délimite un conduit (10) et la pointe (6) d'insertion présente une surface (22) d'appui s'étendant autour du conduit, la surface (22) d'appui étant destinée à venir en appui, après rupture de la portion (8) sécable, contre une face (24) de réception de l'extrémité du corps (2) s'étendant autour du conduit (10).

6. Composant (1) de fixation selon l'une des revendications 1 à 5, dans lequel la butée (32) axiale comprend une platine (36) rapportée.

7. Composant (1) de fixation selon l'une des revendications 1 à 6, dans lequel la portion (8) sécable présente une épaisseur décroissante en direction du corps (2).

8. Composant (1) de fixation selon l'une des revendications 1 à 7, dans lequel le composant (1) de fixation est en aluminium.

9. Procédé de fabrication d'une pièce (100) en matériau composite, comprenant les étapes :
- insérer la pointe (6) d'insertion d'un composant (1) de fixation selon l'une des revendications 1 à 8 à travers une feuille (3) en matériau composite,
- générer une force sur la pointe (6) d'insertion de manière à provoquer la rupture de la portion (8) sécable.

10. Procédé selon la revendication 9, dans lequel le procédé comprend la génération d'ultrasons sur le composant (1) de fixation au cours de l'insertion de la pointe (6) d'insertion à travers la feuille (3) en matériau composite.

## Patentansprüche

1. Befestigungskomponente (1), die einen Körper (2) umfasst, wobei der Körper (2) Befestigungsmittel umfasst, die dazu bestimmt sind, um das Zusammensetzen der Befestigungskomponente (1) mit einem Teil zu erlauben, welches in ergänzende Befestigungsmittel eingebunden ist, eine Einführungsspitze (6), die an einem Ende des Körpers (2) angeordnet ist, wobei die Einführungsspitze (6) einen Scheitel (14) in Form einer Spitze umfasst, um zu erlauben, mindestens einen Teil des Körpers (2) durch Fasern eines Teils aus Verbundwerkstoff hindurch durch Ablenken derselben einzuführen, ohne sie zu durchtrennen, einen axialen Anschlag (32), der dazu bestimmt ist, das Einführen des Körpers durch das Teil aus Verbundwerkstoff hindurch zu stoppen, und einen abtrennbaren Abschnitt (8), der zwischen der Einführungsspitze (6) und dem Ende des Körpers (2) eingesetzt ist, wobei der abtrennbare Abschnitt (8) konfiguriert ist, um durch die Wirkung einer vorbestimmten Druckspannung zu brechen, die auf die Einführungsspitze (6) in Hinblick darauf ausgeübt wird, die Einführungsspitze (6) vom Körper (2) zu lösen.

2. Befestigungskomponente (1) nach Anspruch 1, wobei die Einführungsspitze (6) einen Basisteil (18) und einen Endteil (20) umfasst, wobei der Endteil (20) einen Winkel am Scheitel aufweist, der kleiner als ein Winkel am Scheitel des Basisteils (18) ist.

3. Befestigungskomponente (1) nach Anspruch 1 oder 2, wobei die Einführungsspitze (6) die Form eines Kreiskegels aufweist.

4. Befestigungskomponente (1) nach einem der Ansprüche 1 bis 3, wobei der Körper (2) einen Setzungsteil (30) umfasst, der zwischen dem abtrennbaren Abschnitt (8) und den Befestigungsmitteln angeordnet ist.

5. Befestigungskomponente (1) nach einem der Ansprüche 1 bis 4, wobei der Körper (2) einen Kanal (10) begrenzt, und die Einführungsspitze (6) eine Anlagefläche (22) aufweist, die sich um den Kanal herum erstreckt, wobei die Anlagefläche (22) dazu bestimmt ist, sich nach dem Brechen des abtrennbaren Abschnitts (8) an eine Aufnahmefläche (24) des Endes des Körpers (2) anzulegen, welche sich um den Kanal (10) herum erstreckt.

6. Befestigungskomponente (1) nach einem der Ansprüche 1 bis 5, wobei der axiale Anschlag (32) eine beigebrachte Platte (36) umfasst.

7. Befestigungskomponente (1) nach einem der Ansprüche 1 bis 6, wobei der abtrennbare Abschnitt (8) eine in Richtung des Körpers (2) abnehmende Dicke aufweist.

8. Befestigungskomponente (1) nach einem der Ansprüche 1 bis 7, wobei die Befestigungskomponente (1) aus Aluminium ist.

9. Verfahren zur Herstellung eines Teils (100) aus Verbundwerkstoff, die folgenden Schritte umfassend:
- Einführen der Einführungsspitze (6) einer Befestigungskomponente (1) nach einem der Ansprüche 1 bis 8, durch eine Folie (3) aus Verbundwerkstoff hindurch,
- Generieren einer Kraft an der Einführungsspitze (6), um das Brechen des abtrennbaren Abschnitts (8) hervorzurufen.

10. Verfahren nach Anspruch 9, wobei das Verfahren das Generieren von Ultraschall an der Befestigungskomponente (1) beim Einführen der Einführungsspitze (6) durch die Folie (3) aus Verbundwerkstoff hindurch umfasst.

## Claims

1. A fastening component (1) comprising a body (2), the body (2) comprising fastening means intended to allow the assembly of the fastening component (1) to a piece integrating complementary fastening means, an insertion tip (6) arranged at one end of the body (2), the insertion tip (6) comprising a tip-shaped top (14) to enable at least part of the body (2) to be inserted through fibers of a piece made of composite material by deflecting them without cutting them, an axial abutment (32) intended to stop the insertion of the body through the piece made of composite material, and a breakable portion (8) interposed between the insertion tip (6) and said end of the body (2), the breakable portion (8) being configured to break under the effect of a predetermined compressive force exerted on the insertion tip (6) in order to detach the insertion tip (6) from the body (2).

2. The fastening component (1) according to claim 1, wherein the insertion tip (6) comprises a base part (18) and an end part (20), the end part (20) having a vertex angle less than a vertex angle of the base part (18).

3. The fastening component (1) according to claim 1 or 2, wherein the insertion tip (6) has the shape of a cone of revolution.

4. The fastening component (1) according to any of claims 1 to 3, wherein the body (2) comprises a compaction part (30) arranged between the breakable portion (8) and the fastening means.

5. The fastening component (1) according to any of claims 1 to 4, wherein the body (2) delimits a conduit (10) and the insertion tip (6) has a bearing surface (22) extending around the conduit, the bearing surface (22) being intended to come to bear, after the break of the breakable portion (8), against a face (24) for receiving the end of the body (2) extending around the conduit (10).

6. The fastening component (1) according to any of claims 1 to 5, wherein the axial abutment (32) comprises an attached plate (36).

7. The fastening component (1) according to any of claims 1 to 6, wherein the breakable portion (8) has a thickness decreasing towards the body (2).

8. The fastening component (1) according to any of claims 1 to 7, wherein the fastening component (1) is made of aluminum.

9. A method for manufacturing a piece (100) made of composite material, comprising the steps:
- inserting the tip (6) for inserting a fastening component (1) according to any of claims 1 to 8 through a sheet (3) made of composite material,
- generating a force on the insertion tip (6) so as to cause the break of the breakable portion (8).

10. The method according to claim 9, wherein the method comprises generating ultrasound on the fastening component (1) during the insertion of the insertion tip (6) through the sheet (3) made of composite material.
